# EUROPÄISCHE PATENTSCHRIFT

(11) **EP 3 389 849 B1**
(45) Veröffentlichungstag und Bekanntmachung des Hinweises auf die Patenterteilung: **11.09.2019**
(21) Anmeldenummer: 16809768.1
(22) Anmeldetag: 08.12.2016
(51) Int. Cl.: B01J 20/20, B01J 20/30, B01J 20/28, C01B 32/336, C01B 32/342

(54) **VERFAHREN ZUR WEITERVERWERTUNG EINES KOHLENSTOFFROHMATERIALS**
METHOD FOR FURTHER PROCESSING OF A CARBON RAW MATERIAL
PROCÉDÉ DE RECYCLAGE D'UNE MATIÈRE CARBONÉE

(30) Priorität: 18.12.2015 EP 15201206
(43) Veröffentlichungstag der Anmeldung: 24.10.2018
(73) Patentinhaber: BASF SE, 67056 Ludwigshafen am Rhein (DE)
(72) Erfinder: RUDOLF, Peter, 68526 Ladenburg (DE); SCHWAB, Matthias Georg, 68199 Mannheim (DE); BARTULI, Waldemar, 67433 Neustadt (DE)
(74) Vertreter: BASF IP Association
(86) Internationale Anmeldenummer: PCT/EP2016/080177
(87) Internationale Veröffentlichungsnummer: WO 2017/102527

(56) Entgegenhaltungen:
- DE-A1- 19 912 154
- US-A1- 2014 208 945

## Beschreibung

### Hintergrund der Erfindung

Die vorliegende Offenbarung betrifft ein Verfahren zur Weiterverwertung eines Kohlenstoffrohmaterials, das eine Behandlung des Kohlenstoffrohmaterials mit Kohlenstoffdioxid und/oder Wasserdampf und eine nachfolgende Behandlung mit einer Säure umfasst. Nach diesem Verfahren ist ein Kohlenstoffmaterial mit niedrigem Natrium- und/oder Eisengehalt zugänglich.

### Stand der Technik

Kohlenstoff findet vielfach Anwendung in verschiedenen Industrien wie der Lebensmittelindustrie, der chemischen Industrie oder der pharmazeutischen Industrie. Konkrete Anwendungen sind etwa die Verwendung als Adsorptionsmaterial beispielsweise in der Wasseraufbereitung, Luftreinigung oder um Lösungsmittel aus sensiblen Produkten wie Arzneistoffen zu entfernen. Kohlenstoff kann auch in Elektronikbauteilen eingesetzt werden. Elektronikbauteile sind beispielsweise Elektroden oder Kondensatoren.

Für die meisten dieser Anwendungen ist Kohlenstoff mit möglichst hoher Reinheit bevorzugt, der keine oder nur sehr geringe Anteile an Alkali- und/oder Schwermetallen enthält.

Für viele Anwendungen wird Kohlenstoff meist aus sogenanntem Grünkoks hergestellt. Bei Grünkoks handelt es sich in der Regel um nicht kalzinierten Koks. Grünkoks stammt oft aus der Verkokung von biologischem oder organischem Material. So kann Grünkoks beispielsweise über das Delayed Coking Verfahren (Ullmann's Encyclopedia of Industrial Chemistry, Seventh Edition, 2010, Petroleum Coke, Chapter 3.1.1) gewonnen werden.

Die EP 1526114 A1 offenbart ein Verfahren, bei dem laut Beschreibung ein Kohlenstoff mit niedrigem Alkali- und Schwermetallgehalt erhalten wird. Kohlenstoffhaltige Ausgangsmaterialien werden gemäß der Beschreibung karbonisiert und anschließend mittels Kaliumhydroxid behandelt, wodurch ein sogenannter aktivierter Kohlenstoff erhalten wird. Gemäß der Offenbarung wird dieser anschließend beispielsweise mit heißem Wasser, kohlensäurehaltigem Wasser, wässriger Ammoniaklösung oder heißer Salzsäure gewaschen.

Gemäß DE 10 2010 301 012 A1 wird ein kohlenstoffhaltiges Material, bei dem es sich um Grünkoks handeln kann, in einem ersten Verfahrensschritt mit einer Base behandelt und anschließend mit Zitronensäure gewaschen.

Kohlenstoffmaterialien, die als Nebenprodukt aus dem Quenchöl bei der Herstellung ungesättigter Kohlenwasserstoffe, insbesondere Acetylen, gewonnen werden, werden oft als Acetylenkoks aus dem Öl-Quench-Verfahren bezeichnet. Ein Verfahren zur Herstellung von Acetylen, bei dem derartiger Acetylenkoks als Nebenprodukt anfällt, ist beispielsweise in der DE 2947005 A1 beschrieben. Acetylenkoks aus dem Öl-Quench-Verfahren wird beispielsweise in der EP 1959462 A1 zur Herstellung von porösem Kohlenstoff eingesetzt.

In DE 19912153 A1 und DE 19912154 A1 wird jeweils ein sogenanntes Aktivierungsverfahren beschrieben, bei dem Acetylenkoks einem Trocknungs- und Karbonisierungsschritt unterworfen und das so erhaltene Kohlenstoffmaterial unter Zugabe von Wasserdampf im Inertgasstrom bei erhöhter Temperatur behandelt wird.

Gemäß der GB 1101842 wird Koks aus der Acetylenherstellung bei einer Temperatur von 800 bis 1000°C karbonisiert und anschließend mit Wasserdampf oder anderen Gasen bei ungefähr 900°C aktiviert.

Der vorliegenden Offenbarung liegt die Aufgabe zugrunde, ein Verfahren zur Verfügung zu stellen, das es ermöglicht, ein Kohlenstoffmaterial kostengünstig herzustellen, das neben hoher Reinheit, insbesondere auch hohe Reinheit und hohe Einheitlichkeit, aufweist.

Erfindungsgemäß wird ein Verfahren zur Weiterverwertung eines Kohlenstoffrohmaterials offenbart, wobei das Kohlenstoffrohmaterial einen Wassergehalt von 20 bis 90 Gewichtsprozent, bezogen auf die Gesamtmasse und einen Schwefelgehalt von weniger als 0.05 Prozent, bezogen auf die Gesamttrockenmasse aufweist, und das umfasst,
dass das Kohlenstoffrohmaterial mit Kohlenstoffdioxid oder Wasserdampf oder deren Mischung bei einer Temperatur bis zu 1100 °C behandelt wird
und
dass das so erhaltene Kohlenstoffmaterial mit einer Säure versetzt wird, wobei das Kohlenstoffrohmaterial aus dem Acetylen-Wasser-Quench-Verfahren stammt.

Ein Gegenstand der Offenbarung ist ein Kohlenstoffmaterial mit einem Natriumgehalt von weniger als 0.02 Prozent und/oder einem Eisengehalt von weniger als 0.025 Prozent, bezogen auf die Gesamttrockenmasse, das gemäß dem obigen Verfahren erhältlich ist.

Des Weiteren wird die Verwendung des gemäß dem obigen Verfahren erhaltenen Kohlenstoffmaterials offenbart, zur Herstellung eines Adsorbens, beispielsweise für die Reinigung von Flüssigkeiten, Gasen oder Feststoffen, eines Trägermaterials, beispielsweise für Katalysatoren, eines Füllmaterials oder eines Elektronikbauteils, beispielsweise einer Elektrode oder eines Kondensators.

Auch wird ein Adsorbens offenbart, das das Kohlenstoffmaterial enthält, das nach dem vorliegenden Verfahren erhältlich ist.

### Beschreibung der Erfindung

Die hierin gemachten Angaben zum Wassergehalt sind jeweils bezogen auf die Gesamtmasse. Die hierin gemachten Angaben zu Kohlenstoff, Schwefel, Stickstoff, Natrium, Eisen, Nickel, oder Asche sind jeweils bezogen auf die Gesamttrockenmasse.

Die jeweilige Messmethode zur Gehaltsbestimmung von Schwefel, Stickstoff, Natrium, Eisen oder Nickel ist im Beispielteil angegeben. Die Messmethode zur Bestimmung der spezifischen Oberfläche ist ebenfalls im Beispielteil angegeben. Auch finden sich die Messmethoden zur Bestimmung des Aschgehalts und der lodzahl im Beispielteil.

Das vorliegende Verfahren ermöglicht es, ein Kohlenstoffrohmaterial zu veredeln und einer höheren Wertschöpfung zuzuführen. Mittels des Verfahrens kann zum Beispiel ein Kohlenstoffrohmaterial, das als Nebenprodukt in industriellen Prozessen anfällt, weiter verwertet werden. Erfindungsgemäß wird ein Kohlenstoffrohmaterial, das als Nebenprodukt bei der Acetylenherstellung im Wasser-Quench-Verfahren als Nebenprodukt anfällt, weiterverwertet.

Ein Kohlenstoffrohmaterial kann ein Kohlenstoff oder kohlenstoffhaltiges Material oder eine Mischung von Kohlenstoffen oder kohlenstoffhaltigen Materialien sein. Ein Kohlenstoffrohmaterial kann einen hohen oder sehr hohen Kohlenstoffanteil aufweisen. Typischerweise kann ein Kohlenstoffrohmaterial einen Kohlenstoffanteil von mindestens 80 Prozent, bezogen auf die Gesamttrockenmasse, aufweisen. Meist weist ein Kohlenstoffrohmaterial einen Kohlenstoffanteil von mindestens 90 Prozent, bezogen auf die Gesamttrockenmasse, auf. Bevorzugt kann das Kohlenstoffrohmaterial einen Kohlenstoffgehalt von 95 Prozent oder höher, bezogen auf die Gesamttrockenmasse, aufweisen.

Das Kohlenstoffrohmaterial kann in unterschiedlichen geometrischen Formen vorliegen. Beispielsweise kann das Kohlenstoffrohmaterial als Pulver, als Flocken, als Partikel, als Presslinge, als Granulat, als Splitt oder als Mischung verschiedener geometrischer Formen vorliegen. Das Kohlenstoffrohmaterial kann durch mechanische Bearbeitung in eine beliebige geometrische Form gebracht werden, die sich für die Verwendung in dem vorliegenden Verfahren eignet. Bevorzugt liegt das Kohlenstoffrohmaterial als Partikel mit einem mittleren Partikeldurchmesser von 30 bis 70 Mikrometer vor.

Generell kann das Kohlenstoffrohmaterial meist unabhängig von seiner Herkunft eingesetzt werden. Im Allgemeinen wird jedoch ein Kohlenstoffrohmaterial verwendet, das bereits einen hohen bis sehr hohen Kohlenstoffanteil aufweist. Üblicherweise wird ein solches Kohlenstoffrohmaterial nicht aus der Verkokung von biologischem und/oder organischem Material gewonnen. Kohlenstoff, der aus der Verkokung von biologischem und/oder organischem Material gewonnen wird, kann jedoch dem Kohlenstoffrohmaterial beigemischt werden.

Erfindungsgemäß wird das Kohlenstoffrohmaterial aus dem Acetylen-Wasser-Quench-Verfahren gewonnen.

Das Acetylen-Wasser-Quensch-Verfahren ist beispielsweise in "Ullmann's Encyclopedia of Industrial Chemistry, Sixth Edition, 2000, Vol.1, Chapter 4.2.1" beschrieben. Ein Verfahren zur Abtrennung des, beim Acetylen-Wasser-Quench-Verfahren anfallenden, Kohlenstoffrohmaterials ist ebenfalls in "Ullmann's Encyclopedia of Industrial Chemistry, Sixth Edition, 2000,Vol. 1, Chapter 4.2.1" beschrieben. So sinkt das, dem Acetylen-Wasser-Quench-Verfahren entstammende, Kohlenstoffrohmaterial in einem Sedimentationsschritt an den Grund der Quenchkammer. Von dort kann es dann entfernt werden.

Ein anderes Verfahren, um ein Kohlenstoffrohmaterial aus dem Acetylen-Wasser-Quench-Verfahren zu gewinnen, wird beispielsweise in der WO 2008037588 A1 beschrieben. Das Kohlenstoffrohmaterial wird dabei als wässrige Suspension gewonnen und durch Sedimentation aufkonzentriert.

Im Allgemeinen ist der Wassergehalt des Kohlenstoffrohmaterials nach der Sedimentation noch über dem gewünschten Wert. Durch Entwässerung kann der Wassergehalt des Kohlenstoffrohmaterials auf einen gewünschten Wert von 20 bis 90 Gewichtsprozent, bezogen auf die Gesamtmasse, eingestellt werden. Bei der Auswahl und Anwendung geeigneter Entwässerungsmaßnahmen wird sich der Fachmann im Allgemeinen von praktischen Überlegungen leiten lassen, wie Entwässerungsgrad, energetische oder Anlagen spezifische Erwägungen. Die Entwässerung des Kohlenstoffrohmaterials erfolgt bevorzugt durch Filtration.

Genaue Ausführungsvarianten der Sedimentation und Filtration kann der Fachmann dem allgemeinen Fachwissen entnehmen (Solid-Liquid Filtration and Separation Technology ISBN 3-527-28613-6, Handbuch der mechanischen Fest-Flüssig-Trennung ISBN 3-8027-2196-9). Beispielsweise kann die Sedimentation in handelsüblichen Sedimentationsbehältern, wie zum Beispiel in Eindickern oder Lamellenklärern erfolgen. Die Filtration kann beispielsweise als Druckfiltration erfolgen. Hierfür kann die Druckfiltration mit Kammerfilterpressen erfolgen.

Das Kohlenstoffrohmaterial weist einen Wassergehalt von 20 bis 90 Prozent, bezogen auf die Gesamtmasse, auf. Bevorzugt kann das Kohlenstoffrohmaterial einen Wassergehalt von 55 bis 85 Prozent, bezogen auf die Gesamtmasse, aufweisen. Beispielsweise kann das Kohlenstoffrohmaterial einen Wassergehalt von 30, 40 oder 50 Prozent, bezogen auf die Gesamtmasse, aufweisen.

Dadurch, dass ein Kohlenstoffrohmaterial mit einem Wassergehalt von 20 bis 90 Gewichtsprozent, bevorzugt 55 bis 85 Gewichtsprozent, bezogen auf die Gesamtmasse, in dem vorliegenden Verfahren eingesetzt werden kann, kann ein separater Trocknungs- und/oder Karbonisierungsschritt entfallen. Kohlenstoffrohmaterial aus dem Acetylen-Wasser-Quench-Verfahren kann direkt nach der Entwässerung weiter veredelt werden, wodurch eine bessere Raum-ZeitAusbeute mittels des vorliegenden Verfahrens realisiert werden kann.

Unter einem Karbonisierungsschritt versteht man in der Regel die Behandlung eines Kohlenstoffmaterials, meist Grünkoks, bei einer Temperatur von 700 bis 1000°C unter inerten Bedingungen. Dabei werden meist volatile Anteile aus dem Kohlenstoffmaterial entfernt.

Selbstverständlich sind ein separater Trocknungs- und/oder Karbonisierungsschritt des Kohlenstoffrohmaterials im vorliegenden Verfahren möglich, jedoch nicht notwendig. Meist ist es bevorzugt das Kohlenstoffrohmaterial, das einen wie oben beschriebenen Wassergehalt aufweist, ohne weitere Trocknung und/oder Karbonisierung, also, "as is" zu verwenden.

Ein weiterer Vorteil des vorliegenden Verfahrens ist, dass der mit dem Kohlenstoffrohmaterial eingebrachte Wassergehalt zur Erzeugung von Wasserdampf genutzt werden kann, wenn das Kohlenstoffrohmaterial mit Kohlenstoffdioxid oder Wasserdampf oder der Mischung von Wasserdampf und Kohlenstoffdioxid behandelt wird. Somit muss beispielsweise weniger oder kein Wasserdampf als externer Feed bei der Behandlung des Kohlenstoffrohmaterials mit Wasserdampf oder der Mischung von Wasserdampf und Kohlenstoffdioxid zugeführt werden.

Auch kann ein anderes Kohlenstoffmaterial und/oder Kohlenstoffrohmaterial mit einem unterschiedlichen Wassergehalt zugemischt werden, um die mit dem Kohlenstoffrohmaterial eingebrachte Wassermenge optimal auszunutzen.

Generell kann der Wassergehalt des Kohlenstoffrohmaterials durch Trocknen und/oder Beimischen eines anderen Kohlenstoffmaterials eingestellt werden.

Das andere Kohlenstoffmaterial hat einen Kohlenstoffanteil, der durch seine Herkunft bestimmt wird. Üblicherweise weist auch das andere Kohlenstoffmaterial einen hohen bis sehr hohen Kohlenstoffanteil auf. Das andere Kohlenstoffmaterial kann ein Kohlenstoff oder eine Mischung von Kohlenstoffen sein. Das andere Kohlenstoffmaterial weist meist einen Kohlenstoffanteil von mindestens 70 Prozent, bezogen auf die Gesamttrockenmasse, auf. Bevorzugt kann das andere Kohlenstoffmaterial einen anderen Wassergehalt als das Kohlenstoffrohmaterial aufweisen.

Die Herkunft des anderen Kohlenstoffmaterials ist generell von geringer Bedeutung. Das andere Kohlenstoffmaterial kann aus einer Quelle stammen, oder eine Mischung kohlenstoffhaltiger Materialien unterschiedlicher Herkunft sein. Im Allgemeinen stammt das andere Kohlenstoffmaterial aus dem Acetylen-ÖI-Quensch-Verfahren oder aus der Verkokung von organischen oder biologischen Materialien, oder aus einer Mischung der vorgenannten Quellen. Biologische Materialen umfassen Holz, Sägemehl, Nussschalen, beispielsweise Walnussschalen, Kokosnussschalen, oder Steine von Früchten, Lignin, Torf, Torfmoos, Lignit, Braunkohle, Steinkohle, Anthrazitkohle, Steinkohlenteer, Rückstände aus der Erdöldestillation, Petroleumpeche, Baumwolle und Zellwolle. Organische Materialien umfassen beispielsweise Phenolharze, Acrylharze und Vinylharze. Beispielsweise kann das andere Kohlenstoffmaterial auch ganz oder teilweise nicht kontaminierte Aktivkohle sein. Nicht kontaminierte Aktivkohle kann aus Aktivkohlefiltern stammen, die aufgrund ihres Zeitablaufs ausgetauscht wurden. Das andere Kohlenstoffmaterial kann beispielsweise auch ganz oder teilweise Carbonfasermaterial sein.

Das Kohlenstoffrohmaterial weist einen Schwefelgehalt von weniger als 0.05 Prozent, bezogen auf die Gesamttrockenmasse, auf. Meist weist das Kohlenstoffrohmaterial einen Schwefelgehalt von weniger als 0.04 Prozent, bezogen auf die Gesamttrockenmasse, auf. Bevorzugt kann das Kohlenstoffrohmaterial einen Schwefelgehalt von weniger als 0.03, bezogen auf die Gesamttrockenmasse, aufweisen. Das Kohlenstoffrohmaterial kann auch schwefelfrei sein, das heißt, sein Schwefelgehalt kann unter der Nachweisgrenze liegen. Typischerweise hat das Kohlenstoffrohmaterial einen Schwefelgehalt von 0.02 Prozent oder darüber.

Das Kohlenstoffrohmaterial kann einen Stickstoffgehalt von weniger als 1.5 Prozent, bezogen auf die Gesamttrockenmasse, aufweisen. Meist weist das Kohlenstoffrohmaterial einen Stickstoffgehalt von weniger als 1.0 Prozent, bezogen auf die Gesamttrockenmasse, auf. Bevorzugt kann das Kohlenstoffrohmaterial einen Stickstoffgehalt von weniger als 0.7 Prozent, bezogen auf die Gesamttrockenmasse, aufweisen. Das Kohlenstoffrohmaterial kann auch stickstofffrei sein, das heißt, sein Stickstoffgehalt kann unter der Nachweisgrenze liegen. Typischerweise hat das Kohlenstoffrohmaterial einen Stickstoffgehalt von 0.5 Prozent oder darüber.

Das Kohlenstoffrohmaterial kann einen Nickelgehalt von weniger als 0.006 Prozent, bezogen auf die Gesamttrockenmasse, aufweisen. Meist weist das Kohlenstoffrohmaterial einen Nickelgehalt von weniger als 0.005 Prozent, bezogen auf die Gesamttrockenmasse, auf. Bevorzugt kann das Kohlenstoffrohmaterial einen Nickelgehalt von weniger als 0.004 Prozent, bezogen auf die Gesamttrockenmasse, aufweisen. Das Kohlenstoffrohmaterial kann auch frei von Nickel sein, das heißt, sein Nickelgehalt kann unter der Nachweisgrenze liegen. Typischerweise hat das Kohlenstoffrohmaterial einen Nickelgehalt von 0.002 Prozent oder darüber.

Das Kohlenstoffrohmaterial kann eine spezifische Oberfläche von 100 m²/g bis 400 m²/g aufweisen. Meist weist das Kohlenstoffrohmaterial eine spezifische Oberfläche von 150 m²/g bis 350 m²/g auf. Bevorzugt kann das Kohlenstoffrohmaterial eine spezifische Oberfläche von 200 m²/g bis 300 m²/g aufweisen. Beispielsweise kann das Kohlenstoffrohmaterial eine spezifische Oberfläche von 180, 210, 240 oder 270 m²/g aufweisen.

Das Kohlenstoffrohmaterial kann:
einen Wassergehalt von 20 bis 90 Prozent und einen Schwefelgehalt von weniger als 0.05 Prozent aufweisen,
oder
einen Wassergehalt von 55 bis 85 Prozent und einen Schwefelgehalt von weniger als 0.05 Prozent aufweisen,
oder
einen Kohlenstoffgehalt von 95 Prozent oder mehr, einen Wassergehalt von 20 bis 90 Prozent und einen Schwefelgehalt von weniger als 0.05 Prozent aufweisen,
oder
einen Wassergehalt von 20 bis 90 Prozent und einen Schwefelgehalt von weniger als 0.05 Prozent aufweisen und aus dem Acetylen-Wasser-Quench-Verfahren stammen,
oder
einen Wassergehalt von 55 bis 85 Prozent und einen Schwefelgehalt von weniger als 0.05 Prozent aufweisen und aus dem Acetylen-Wasser-Quench-Verfahren stammen,
oder
einen Wassergehalt von 20 bis 90 Prozent, einen Schwefelgehalt von weniger als 0.05 Prozent und einen Nickelgehalt von weniger als 0.006 Prozent aufweisen und aus dem Acetylen-Wasser-Quench-Verfahren stammen,
oder
einen Wassergehalt von 20 bis 90 Prozent, einen Schwefelgehalt von weniger als 0.05 Prozent und eine spezifische Oberfläche von 100 m²/g bis 400 m²/g aufweisen,
oder
einen Wassergehalt von 20 bis 90 Prozent, einen Schwefelgehalt von weniger als 0.05 Prozent und eine spezifische Oberfläche von 200 m²/g bis 300 m²/g aufweisen,
oder
einen Wassergehalt von 20 bis 90 Prozent, einen Schwefelgehalt von weniger als 0.05 Prozent, einen Stickstoffgehalt von weniger als 1.5 Prozent und eine spezifische Oberfläche von 100 m²/g bis 400 m²/g aufweisen,
oder
einen Wassergehalt von 20 bis 90 Prozent, einen Schwefelgehalt von weniger als 0.05 Prozent und eine spezifische Oberfläche von 100 m²/g bis 400 m²/g aufweisen und aus dem Acetylen-Wasser-Quench-Verfahren stammen,
oder
einen Wassergehalt von 20 bis 90 Prozent, einen Schwefelgehalt von weniger als 0.05 Prozent und eine spezifische Oberfläche von 200 m²/g bis 300 m²/g aufweisen und aus dem Acetylen-Wasser-Quench-Verfahren stammen,
oder
einen Wassergehalt von 20 bis 90 Prozent, einen Schwefelgehalt von weniger als 0.05 Prozent, einen Stickstoffgehalt von weniger als 1.5 Prozent und eine spezifische Oberfläche von 100 m²/g bis 400 m²/g aufweisen und aus dem Acetylen-Wasser-Quench-Verfahren stammen,
oder
einen Wassergehalt von 20 bis 90 Prozent und einen Schwefelgehalt von weniger als 0.05 Prozent aufweisen und wobei der Wassergehalt des Kohlenstoffrohmaterials durch Trocknen und/oder Beimischen eines anderen Kohlenstoffmaterials eingestellt werden kann,
oder
einen Wassergehalt von 20 bis 90 Prozent und einen Schwefelgehalt von weniger als 0.05 Prozent aufweisen und aus dem Acetylen-Wasser-Quench-Verfahren stammen und wobei der Wassergehalt des Kohlenstoffrohmaterials durch Trocknen und/oder Beimischen eines anderen Kohlenstoffmaterials eingestellt werden kann.

### Behandlung eines Kohlenstoffrohmaterials

Das vorliegende Verfahren umfasst die Behandlung des Kohlenstoffrohmaterials mit Kohlenstoffdioxid oder Wasserdampf oder deren Mischung.

Die Behandlung des Kohlenstoffrohmaterials mit Kohlenstoffdioxid oder Wasserdampf oder deren Mischung wird typischerweise unter Bedingungen durchgeführt, unter denen Kohlenstoffdioxid und/oder Wasserdampf in der Gasphase vorliegen. Aufgrund des Wassergehalts des eingesetzten Kohlenstoffrohmaterials kann Wasserdampf generell ein Bestandteil der Gasphase sein, auch wenn kein externer Wasserdampf-Feed vorhanden ist. Die Reaktion von Wasserdampf mit dem Kohlenstoffrohmaterial kann darüber hinaus dazu führen, dass Kohlenstoffdioxid in der Gasphase vorhanden ist. Somit kann generell auch Kohlenstoffdioxid Bestandteil der Gasphase sein, auch wenn kein externer Kohlenstoffdioxid-Feed vorhanden ist.

In der Regel wird Kohlenstoffdioxid und/oder Wasserdampf dem Kohlenstoffrohmaterial als externer Feed zugegeben.

Je nach Wassergehalt des Kohlenstoffrohmaterials kann es bevorzugt sein, keinen oder nur wenig Wasserdampf als externen Feed zuzugeben. Auch wenn der Beschaffenheit von Kohlenstoffdioxid und/oder Wasserdampf generell keine große Bedeutung zukommt, weisen diese typischerweise nur sehr geringfügige Verunreinigungen auf. Im Idealfall sind Kohlenstoffdioxid und/oder Wasserdampf frei von Verunreinigungen. Frei von Verunreinigungen heißt, dass der Gehalt an der jeweiligen Verunreinigung unterhalb der jeweiligen Nachweisegrenze liegt. Verunreinigungen können beispielsweise Spuren von Schwer- und/oder Alkalimetallen und/oder Spuren von Schwefelverbindungen sein.

Kohlenstoffdioxid und/oder Wasserdampf können unverdünnt oder verdünnt mit Inertgas zum Kohlenstoffrohmaterial zugegeben werden.

Unter Inertgas wird in der Regel ein Gas oder Gasgemisch verstanden, welches unter den gegebenen Reaktionsbedingungen keine Reaktion mit den an der Reaktion beteiligten Edukten, Reagenzien, Lösungsmitteln oder den entsprechen Produkten eingeht. Inertgas kann beispielsweise Stickstoff oder Argon oder deren Mischung sein. Inertgas weist typischerweise nur sehr geringfügige Verunreinigungen auf. Im Idealfall ist Inertgas frei von Verunreinigungen. Frei von Verunreinigungen heißt, dass der Gehalt an der jeweiligen Verunreinigung unterhalb der jeweiligen Nachweisegrenze liegt. Verunreinigungen können beispielsweise Spuren von Schwer- und/oder Alkalimetallen und/oder Spuren von Schwefelverbindungen sein.

Im Allgemeinen wird eine Mischung aus zwei oder mehr der vorgenannten Gase als externer Feed dem Kohlenstoffrohmaterial zugeführt.

Während der Behandlung des Kohlenstoffrohmaterials mit Kohlenstoffdioxid oder Wasserdampf oder deren Mischung kann die Konzentration von Kohlenstoffdioxid oder Wasserdampf oder deren Mischung in der Gasphase meist von 5 bis 100 Prozent sein. Bevorzugt kann die Konzentration von 10 bis 95 Prozent sein. Besonders bevorzugt kann die Konzentration von 25 bis 90 Prozent sein. Die Konzentration von Kohlenstoffdioxid, Wasserdampf oder deren Mischung in der Gasphase kann sich im Verlauf der Behandlung ändern. Sofern eine Mischung von Wasserdampf und Kohlenstoffdioxid verwendet wird, kann die Konzentration der Mischungsbestandteile variabel, bevorzugt innerhalb der angegebenen Grenzen variabel, sein.

Die Konzentration von Inertgas, beispielsweise Stickstoff oder Argon oder deren Mischung, in der Gasphase ist in der Regel von 0 bis 95 Prozent. Bevorzugt kann die Konzentration von 5 bis 90 Prozent sein. Besonders bevorzugt kann die Konzentration von 10 bis 75 Prozent sein. Die Konzentration von Inertgas in der Gasphase kann sich im Verlauf der Behandlung ändern. Sofern eine Mischung von Stickstoff und Argon verwendet wird, kann die Konzentration der Mischungsbestandteile variabel, bevorzugt innerhalb der angegebenen Grenzen variabel, sein.

Die Behandlung des Kohlenstoffrohmaterials mit Kohlenstoffdioxid oder Wasserdampf oder deren Mischung erfolgt normalerweise bei erhöhter Temperatur. In der Regel erfolgt die Behandlung des Kohlenstoffrohmaterials mit Kohlenstoffdioxid oder Wasserdampf oder deren Mischung bei einer Temperatur, bei der unter den vorliegenden Bedingungen ein Anstieg der spezifischen Oberfläche des Kohlenstoffrohmaterials, beziehungsweise des so erhaltenen Kohlenstoffmaterials zu beobachten ist. Die Behandlung kann in jeder dafür erdenklichen Apparatur erfolgen, beispielsweise in einem Rohrofen, Drehrohrofen oder Hordenofen. Wie zuvor erwähnt, kann Kohlenstoffdioxid oder Wasserdampf oder deren Mischung als externer Feed in die Apparatur zugeführt werden. Die Behandlung des Kohlenstoffrohmaterials mit Kohlenstoffdioxid oder Wasserdampf oder deren Mischung erfolgt bei einer Temperatur bis zu 1100°C. Bevorzugt kann die Behandlung eines Kohlenstoffrohmaterials mit Kohlenstoffdioxid oder Wasserdampf oder deren Mischung bei einer Temperatur bis zu 1000°C erfolgen. Besonders bevorzugt kann die Behandlung eines Kohlenstoffrohmaterials mit Kohlenstoffdioxid oder Wasserdampf oder deren Mischung bei einer Temperatur bis zu 950°C erfolgen.

Das Erhitzen des Kohlenstoffrohmaterials auf die Zieltemperatur kann unter Inertgas und/oder Kohlenstoffdioxid und/oder Wasserdampf erfolgen. Aufgrund des Wassergehalts des eingesetzten Kohlenstoffrohmaterials kann, wie bereits erwähnt, Wasserdampf generell ein Bestandteil der Gasphase sein, auch wenn kein externer Wasserdampf-Feed vorhanden ist. Die Reaktion von Wasserdampf mit dem Kohlenstoffrohmaterial kann, wie ebenfalls bereits erwähnt, darüber hinaus dazu führen, dass Kohlenstoffdioxid in der Gasphase vorhanden ist. Somit kann generell auch Kohlenstoffdioxid Bestandteil der Gasphase sein, auch wenn kein externer Kohlenstoffdioxid-Feed vorhanden ist. Das Erhitzen eines Kohlenstoffrohmaterials kann beispielsweise unter Stickstoff und/oder Argon als externer Feed erfolgen. Das Erhitzen kann auch unter Stickstoff und Wasserdampf oder Stickstoff und Kohlenstoffdioxid als externer Feed erfolgen. Das Erhitzen kann ebenfalls unter Argon und Wasserdampf oder Argon und Kohlenstoffdioxid als externer Feed erfolgen. Auch kann das Erhitzen unter Stickstoff und Wasserdampf und Kohlenstoffdioxid als externer Feed erfolgen. Genauso kann das Erhitzen auf die Zieltemperatur unter Argon und Wasserdampf und Kohlenstoffdioxid als externer Feed erfolgen. Abhängig von der gewünschten Wasserdampfkonzentration in der Gasphase kann es nötig sein, weniger oder keinen Wasserdampf als externen Feed zuzusetzen.

Die Zieltemperatur ist in der Regel die Temperatur, bei der das Kohlenstoffrohmaterial mit Kohlenstoffdioxid oder Wasserdampf oder deren Mischung behandelt werden soll. Die Zieltemperatur ist bis zu 1100°C, bevorzugt kann die Zieltemperatur bis zu 1000°C sein und besonders bevorzugt kann die Zieltemperatur bis zu 950°C sein. In der Regel wird bei der Behandlung des Kohlenstoffrohmaterials mit Kohlenstoffdioxid oder Wasserdampf oder deren Mischung eine solche Temperatur ausgewählt, bei der, unter den vorliegenden Bedingungen, ein Anstieg der spezifischen Oberfläche des Kohlenstoffrohmaterials, beziehungsweise, des so erhaltenen Kohlenstoffmaterials, zu beobachten ist. Eine solche Temperatur könnte beispielsweise als Mindesttemperatur für die Behandlung mit Kohlenstoffdioxid oder Wasserdampf oder deren Mischung angesehen werden. Im Allgemeinen erfolgt die Behandlung des Kohlenstoffrohmaterials mit Kohlenstoffdioxid oder Wasserdampf oder deren Mischung bei einer Temperatur von 900 °C bis 950°C.

Die Heizrate zum Erreichen der Zieltemperatur kann von 3 K/min bis 20 K/min sein. Bevorzugt kann die Heizrate zum Erreichen der gewünschten Temperatur von 5 K/min bis 15 K/min sein. Besonders bevorzugt kann die Heizrate zum Erreichen der gewünschten Temperatur von 8 K/min bis 12 K/min sein.

Die Behandlung des Kohlenstoffrohmaterials mit Kohlenstoffdioxid oder Wasserdampf oder deren Mischung kann bei einem Druck von 0.5 bar bis 100 bar erfolgen. Bevorzugt kann die Behandlung des Kohlenstoffrohmaterials mit Kohlenstoffdioxid oder Wasserdampf oder deren Mischung bei einem Druck von 0.5 bar bis 50 bar erfolgen. Besonders bevorzugt kann die Behandlung des Kohlenstoffrohmaterials mit Kohlenstoffdioxid oder Wasserdampf oder deren Mischung bei einem Druck von 0.5 bar bis 20 bar erfolgen. So kann die Behandlung des Kohlenstoffrohmaterials mit Kohlenstoffdioxid oder Wasserdampf oder deren Mischung beispielsweise bei einem Druck von 0.8 bar, 1.0 bar, 2.0 bar, 5.0 bar, 8.0 bar, 10 bar oder 15 bar erfolgen. Der Druck kann während der Behandlung des Kohlenstoffrohmaterials mit Kohlenstoffdioxid oder Wasserdampf oder deren Mischung auch variabel, bevorzugt variabel innerhalb der angegebenen Grenzen, sein.

Das Kohlenstoffrohmaterial wird mit Kohlenstoffdioxid oder Wasserdampf oder deren Mischung meist so lange behandelt werden, bis das so erhaltene Kohlenstoffmaterial eine spezifische Oberfläche von 500 m²/g bis 2000 m²/g aufweist. Bevorzugt kann die Behandlung eines Kohlenstoffrohmaterials mit Kohlenstoffdioxid oder Wasserdampf oder deren Mischung so lange erfolgen, bis das so erhaltene Kohlenstoffmaterial eine spezifische Oberfläche von 600 m²/g bis 1500 m²/g aufweist. Besonders bevorzugt kann die Behandlung eines Kohlenstoffrohmaterials mit Kohlenstoffdioxid oder Wasserdampf oder deren Mischung so lange erfolgen, bis das so erhaltene Kohlenstoffmaterial eine spezifische Oberfläche von 700 m²/g bis 1100 m²/g aufweist. Beispielsweise kann das so erhaltene Kohlenstoffmaterial eine spezifische Oberfläche von 750, 800, 850, 900, 950, 1000 oder 1050 m²/g aufweisen.

Das Kohlenstoffrohmaterial kann
einen Wassergehalt von 20 bis 90 Prozent und einen Schwefelgehalt von weniger als 0.05 Prozent aufweisen und aus dem Acetylen-Wasser-Quench-Verfahren stammen und mit Kohlenstoffdioxid oder Wasserdampf oder deren Mischung bei einer Temperatur bis zu 1100°C behandelt werden,
oder
einen Wassergehalt von 20 bis 90 Prozent und einen Schwefelgehalt von weniger als 0.05 Prozent aufweisen und aus dem Acetylen-Wasser-Quench-Verfahren stammen und mit Kohlenstoffdioxid oder Wasserdampf oder deren Mischung bei einer Temperatur bis zu 1100°C behandelt werden, bis das erhaltene Kohlenstoffmaterial eine spezifische Oberfläche von 500 m²/g bis 2000 m²/g aufweist,
oder
einen Wassergehalt von 20 bis 90 Prozent und einen Schwefelgehalt von weniger als 0.05 Prozent aufweisen und mit Kohlenstoffdioxid oder Wasserdampf oder deren Mischung bei einer Temperatur bis zu 950°C behandelt werden,
oder
einen Wassergehalt von 20 bis 90 Prozent und einen Schwefelgehalt von weniger als 0.05 Prozent aufweisen und mit Kohlenstoffdioxid oder Wasserdampf oder deren Mischung bei einer Temperatur bis zu 950°C behandelt werden, bis das so erhaltene Kohlenstoffmaterial eine spezifische Oberfläche von 500 m²/g bis 2000 m²/g aufweist,
oder
einen Wassergehalt von 20 bis 90 Prozent und einen Schwefelgehalt von weniger als 0.05 Prozent aufweisen und aus dem Acetylen-Wasser-Quench-Verfahren stammen und eine spezifische Oberfläche von 100m²/g bis 400 m²/g aufweisen und mit Kohlenstoffdioxid oder Wasserdampf oder deren Mischung bei einer Temperatur bis zu 1100°C behandelt werden,
oder
einen Wassergehalt von 20 bis 90 Prozent und einen Schwefelgehalt von weniger als 0.05 Prozent aufweisen und aus dem Acetylen-Wasser-Quench-Verfahren stammen und eine spezifische Oberfläche von 200m²/g bis 300 m²/g aufweisen und mit Kohlenstoffdioxid oder Wasserdampf oder deren Mischung bei einer Temperatur bis zu 1100°C behandelt werden,
oder
einen Wassergehalt von 20 bis 90 Prozent und einen Schwefelgehalt von weniger als 0.05 Prozent und einen Nickelgehalt von weniger als 0.006 Prozent aufweisen und aus dem Acetylen-Wasser-Quench-Verfahren stammen und mit Kohlenstoffdioxid oder Wasserdampf oder deren Mischung bei einer Temperatur bis zu 1100°C behandelt werden, bis das so erhaltene Kohlenstoffmaterial eine spezifische Oberfläche von 500 m²/g bis 2000 m²/g aufweist.

Die Behandlung des Kohlenstoffrohmaterials mit Kohlenstoffdioxid oder Wasserdampf oder deren Mischung und die Behandlung des so erhaltenen Kohlenstoffmaterials mit einer Säure können zwar direkt aneinander anschließen, schließen in der Regel jedoch nicht direkt aneinander an. Für gewöhnlich wird nämlich das so erhaltene Kohlenstoffmaterial abgekühlt, bevor es mit einer Säure versetzt wird. Das Abkühlen des so erhaltenen Kohlenstoffmaterials erfolgt meist unter Inertgas. In der Regel wird auf Umgebungstemperatur, beispielsweise auf eine Temperatur von 20°C bis 30°C, abgekühlt.

Dem Abkühlen können sich noch andere Verfahrensschritte anschließen. Diese können Waschschritte oder Schritte zur mechanischen Behandlung und/oder Formgebung des so erhaltenen Kohlenstoffmaterials umfassen, bevor es mit einer Säure versetzt wird.

Im vorliegenden Verfahren wird das so erhaltene Kohlenstoffmaterial mit einer Säure versetzt. Das so erhaltene Kohlenstoffmaterial kann mit einer Säure, die im Allgemeinen eine Temperatur von 0°C bis 150°C aufweist, versetzt werden. Bevorzugt kann das so erhaltene Kohlenstoffmaterial mit einer Säure, die eine Temperatur von 10°C bis 110°C aufweist, versetzt werden. Insbesondere kann das so erhaltene Kohlenstoffmaterial mit einer Säure, die eine Temperatur von 20°C bis 100°C aufweist, versetzt werden. So kann das so erhaltene Kohlenstoffmaterial beispielsweise mit einer Säure, die eine Temperatur von 40°C, 60°C oder 80°C aufweist, versetzt werden.

Eine Säure kann dabei eine Mineralsäure oder eine Carbonsäure oder eine Mischung deren sein. Eine Säure kann auch eine Mischung verschiedener Mineralsäuren und/oder verschiedener Carbonsäuren sein. Mineral und/oder Carbonsäuren können auch in verdünnter Form vorliegen und im Speziellen als ihre wässrigen Lösungen. Mineral und/oder Carbonsäuren können unabhängig voneinander als ihre wässrigen Lösungen Bestandteil der obigen Mischungen sein.

Es entspricht der Routinetätigkeit des Fachmanns, die Konzentrationen der Säuren und/oder deren Mischungen einzustellen. Es entspricht auch der Routinetätigkeit des Fachmanns entsprechende Mischungen der Säuren auszuwählen und herzustellen.

Bevorzugt kann das so erhaltene Kohlenstoffmaterial mit Salzsäure, Schwefelsäure, Phosphorsäure, Zitronensäure, Oxalsäure, Essigsäure oder einer Mischung davon versetzt werden. Besonders bevorzugt kann das so erhaltene Kohlenstoffmaterial mit Salzsäure und/oder Schwefelsäure versetzt werden. Ganz bevorzugt kann das so erhaltene Kohlenstoffmaterial mit Salzsäure, insbesondere mit Salzsäure einer Konzentration von 5N (fünf molare Salzsäure), versetzt werden.

Das Kohlenstoffrohmaterial kann
einen Wassergehalt von 20 bis 90 Prozent und einen Schwefelgehalt von weniger als 0.05 Prozent aufweisen und aus dem Acetylen-Wasser-Quench-Verfahren stammen und mit Kohlenstoffdioxid oder Wasserdampf oder deren Mischung bei einer Temperatur bis zu 1100°C behandelt und das so erhaltene Kohlenstoffmaterial mit einer Säure versetzt werden,
oder
einen Wassergehalt von 20 bis 90 Prozent und einen Schwefelgehalt von weniger als 0.05 Prozent aufweisen und aus dem Acetylen-Wasser-Quench-Verfahren stammen und mit Kohlenstoffdioxid oder Wasserdampf oder deren Mischung bei einer Temperatur bis zu 1100°C behandelt und das so erhaltene Kohlenstoffmaterial mit Salzsäure und/oder Schwefelsäure versetzt werden,
oder
einen Wassergehalt von 20 bis 90 Prozent und einen Schwefelgehalt von weniger als 0.05 Prozent aufweisen und aus dem Acetylen-Wasser-Quench-Verfahren stammen und mit Kohlenstoffdioxid oder Wasserdampf oder deren Mischung bei einer Temperatur bis zu 1100°C behandelt werden, bis das so erhaltene Kohlenstoffmaterial eine spezifische Oberfläche von 500 m²/g bis 2000 m²/g aufweist, und das so erhaltene Kohlenstoffmaterial mit Salzsäure oder Schwefelsäure versetzt werden,
oder
einen Wassergehalt von 20 bis 90 Prozent und einen Schwefelgehalt von weniger als 0.05 Prozent aufweisen und aus dem Acetylen-Wasser-Quench-Verfahren stammen und mit Kohlenstoffdioxid oder Wasserdampf oder deren Mischung bei einer Temperatur bis zu 1100°C behandelt und das so erhaltene Kohlenstoffmaterial mit Salzsäure der Konzentration 5N versetzt werden,
oder
einen Wassergehalt von 20 bis 90 Prozent und einen Schwefelgehalt von weniger als 0.05 Prozent aufweisen und aus dem Acetylen-Wasser-Quench-Verfahren stammen und eine spezifische Oberfläche von 100 m²/g bis 400 m²/g aufweisen und mit Kohlenstoffdioxid oder Wasserdampf oder deren Mischung bei einer Temperatur bis zu 1100°C behandelt und das so erhaltene Kohlenstoffmaterial mit Salzsäure versetzt werden,
oder
einen Wassergehalt von 20 bis 90 Prozent und einen Schwefelgehalt von weniger als 0.05 Prozent und einen Nickelgehalt von weniger als 0.006 Prozent aufweisen und mit Kohlenstoffdioxid oder Wasserdampf oder deren Mischung bei einer Temperatur bis zu 1100°C behandelt und das so erhaltene Kohlenstoffmaterial mit Salzsäure versetzt werden,
oder
einen Wassergehalt von 20 bis 90 Prozent und einen Schwefelgehalt von weniger als 0.05 Prozent und einen Nickelgehalt von weniger als 0.006 Prozent aufweisen und mit Kohlenstoffdioxid oder Wasserdampf oder deren Mischung bei einer Temperatur bis zu 1100°C behandelt werden, bis das so erhaltene Kohlenstoffmaterial eine spezifische Oberfläche von 500 m²/g bis 2000 m²/g aufweist, und das so erhaltene Kohlenstoffmaterial mit Salzsäure versetzt werden.

Meist ist es bevorzugt, dass das so erhaltene Kohlenstoffmaterial Umgebungstemperatur hat, wenn es mit einer Säure versetzt wird. Es unterliegt jedoch den allgemeinen praktischen Überlegungen des Fachmanns, dass das so erhaltene Kohlenstoffmaterial beim Versetzen mit einer Säure eine für die Verfahrensführung vorteilhafte Temperatur aufweist.

Das mit einer Säure versetzte Kohlenstoffmaterial kann mit Wasser und/oder Alkohol behandelt werden. Alkohol kann ein Alkohol oder eine Mischung verschiedener Alkohole sein. Das mit einer Säure versetzte Kohlenstoffmaterial kann mit Wasser und/oder Alkohol einer Temperatur von 0°C bis 100°C behandelt werden. Bevorzugt kann die Behandlung des mit einer Säure versetzten Kohlenstoffmaterials mit Wasser und/oder Alkohol einer Temperatur von 10°C bis 100°C erfolgen. Besonders bevorzugt kann die Behandlung des mit einer Säure versetzten Kohlenstoffmaterials mit Wasser und/oder Alkohol einer Temperatur von 20 bis 100°C erfolgen. Beispielsweise kann das mit einer Säure versetzte Kohlenstoffmaterial mit Wasser und/oder Alkohol einer Temperatur von 40°C, 60°C oder 80°C behandelt werden. Im Allgemeinen wird das mit einer Säure versetzte Kohlenstoffmaterial mit Wasser und/oder Alkohol gewaschen, wobei die Temperatur von Wasser und/oder Alkohol nicht über der jeweiligen Siedetemperatur bei Normaldruck liegt.

Die Behandlung des mit einer Säure versetzten Kohlenstoffmaterials mit Wasser und/oder Alkohol erfolgt in der Regel so lange, bis sich ein pH Wert von 6.5 bis 7.5 der Waschflüssigkeit einstellt.

Das für die Behandlung eingesetzte Wasser ist in der Regel weitgehend frei von Verunreinigungen. Im Idealfall ist das eingesetzte Wasser frei von Verunreinigungen. Frei von Verunreinigungen heißt, dass der Gehalt an der jeweiligen Verunreinigungen unterhalb der jeweiligen Nachweisegrenze liegt. Verunreinigungen sind typischerweise Metallsalze. Wasser das weitgehend frei von Verunreinigungen ist, ist beispielsweise destilliertes Wasser oder entionisiertes Wasser.

Der für die Behandlung eingesetzte Alkohol ist in der Regel weitgehend frei von Verunreinigungen. Im Idealfall ist der eingesetzte Alkohol frei von Verunreinigungen. Verunreinigungen sind typischerweise Metallsalze und/oder organische Verbindungen, bei denen es sich nicht um Alkohol handelt. Alkohol kann typischerweise ein C1 bis C4 Alkohol sein, wobei dieser linear oder verzweigt sein kann. Auch kann Alkohol eine beliebige Mischung verschiedener linearer und/oder verzweigter C1 bis C4 Alkohole sein. Alkohol kann beispielsweise Methanol, Ethanol, Propanol, Isopropanol, n-Butanol oder iso-Butanol oder eine beliebige Mischung aus diesen sein.

Nach der Behandlung mit Wasser und/oder Alkohol kann das Kohlenstoffmaterial getrocknet werden. Die Trocknung des Kohlenstoffmaterials kann in geeigneten Apparaturen bei einer Temperatur von 20 bis 100°C erfolgen. Die Auswahl geeigneter Trocknungsapparaturen und/oder Bedingungen unterliegt der Routinetätigkeit des Fachmanns.

### Kohlenstoffmaterial

Ebenfalls Gegenstand der Offenbarung ist ein Kohlenstoffmaterial, das nach dem vorliegenden Verfahren hergestellt werden kann, beziehungsweise nach dem vorliegenden Verfahren erhältlich ist.

So kann nach dem vorliegenden Verfahren ein Kohlenstoffmaterial gewonnen werden, dass einen Natriumgehalt von weniger als 0.02 Prozent und/oder einen Eisengehalt von weniger als 0.025 Prozent bezogen auf die Gesamttrockenmasse aufweist.

Ein Vorteil des vorliegenden Verfahrens ist, dass ein Kohlenstoffmaterial mit hoher Reinheit gewonnen werden kann.

Ein Maß für hohe Reinheit kann ein hoher oder sehr hoher Kohlenstoffanteil sein. Der Kohlenstoffanteil im Kohlenstoffmaterial ist typischerweise größer als 80 Prozent, bezogen auf die Gesamttrockenmasse. Meist ist der Kohlenstoffanteil größer als 90 Prozent, bezogen auf die Gesamttrockenmasse. Bevorzugt kann der Kohlenstoffanteil größer als 95 Prozent, bezogen auf die Gesamttrockenmasse, sein.

Auch kann ein geringer oder sehr geringer Anteil an Akalimetall- und/oder Schwermetallverunreinigungen ein Maß für hohe Reinheit sein. Alkalimetallverunreinigungen können Natrium und/oder Kalium sein. Schwermetallverunreinigungen sind meist auf Eisen, Cobalt, Nickel, Vanadium, Chrom, Mangan oder Kupfer oder deren Mischungen zurückzuführen.

Der Natriumgehalt ist weniger als 0.02 Prozent, bezogen auf die Gesamttrockenmasse. Meist ist der Natriumgehalt weniger als 0.018 Prozent, bezogen auf die Gesamttrockenmasse. Bevorzugt kann der Natriumgehalt weniger als 0.015 Prozent, bezogen auf die Gesamttrockenmasse, sein. Der Eisengehalt ist weniger als 0.025 Prozent, bezogen auf die Gesamttrockenmasse. Meist ist der Eisengehalt weniger als 0.02 Prozent, bezogen auf die Gesamttrockenmasse. Bevorzugt kann der Eisengehalt weniger als 0.018 Prozent, bezogen auf die Gesamttrockenmasse, sein. Der Natriumgehalt ist weniger als 0.02 Prozent und der Eisengehalt ist weniger als 0.025 Prozent, bezogen auf die Gesamttrockenmasse. Meist ist der Natriumgehalt weniger als 0.018 Prozent und der Eisengehalt ist weniger als 0.02 Prozent, bezogen auf die Gesamttrockenmasse. Bevorzugt kann der Natriumgehalt weniger als 0.015 Prozent und der Eisengehalt weniger als 0.018 Prozent, bezogen auf die Gesamttrockenmasse, sein.

Das nach dem vorliegenden Verfahren gewonnene Kohlenstoffmaterial kann auch frei von Natrium und/oder Eisen sein. Dies bedeutet, dass der Natrium und/oder Eisengehalt unterhalb der jeweiligen Nachweisegrenze liegt. Typischerweise kann das nach dem vorliegenden Verfahren gewonnene Kohlenstoffmaterial einen Natriumgehalt von 0.013 Prozent und/oder einen Eisengehalt von 0.009 Prozent, bezogen auf die Gesamttrockenmasse, oder darüber aufweisen.

Der Nickelgehalt ist oft weniger als 0.006 Prozent, bezogen auf die Gesamttrockenmasse. Meist ist der Nickelgehalt weniger als 0.005 Prozent, bezogen auf die Gesamttrockenmasse. Bevorzugt kann der Nickelgehalt weniger als 0.004 Prozent, bezogen auf die Gesamttrockenmasse, sein.

Das nach dem vorliegenden Verfahren gewonnene Kohlenstoffmaterial kann auch frei von Nickel sein. Dies bedeutet, dass der Nickelgehalt unterhalb der jeweiligen Nachweisegrenze liegt. Typischerweise kann das nach dem vorliegenden Verfahren gewonnene Kohlenstoffmaterial einen Nickelgehalt von 0.002 Prozent oder darüber aufweisen.

Ein Maß für hohe Reinheit kann auch ein geringer oder sehr geringer Aschegehalt sein. Der Aschegehalt des Kohlenstoffmaterials ist typischerweise kleiner als 2.0 Prozent, bezogen auf die Gesamttrockenmasse. Meist ist der Aschegehalt kleiner als 1.8 Prozent, bezogen auf die Gesamttrockenmasse. Bevorzugt kann der Aschegehalt kleiner als 1.5 Prozent, bezogen auf die Gesamttrockenmasse, sein. Typischerweise ist der Aschegehalt des Kohlenstoffmaterials größer als 1.1 Prozent, bezogen auf die Gesamttrockenmasse.

Die spezifische Oberfläche des nach dem vorliegenden Verfahren erhaltenen Kohlenstoffmaterials kann von 500 m²/g bis 2000 m²/g sein. Bevorzugt kann die spezifische Oberfläche von 600 m²/g bis 1500 m²/g sein und besonders bevorzugt kann die spezifische Oberfläche von 700 m²/g bis 1100 m²/g sein.

Die lodzahl des nach dem vorliegenden Verfahren erhaltenen Kohlenstoffmaterials kann von 700 mg/g bis 1200 mg/g sein. Bevorzugt kann die lodzahl von 750 mg/g bis 1000 mg/g sein und besonders bevorzugt kann die lodzahl von 800 mg/g bis 950 mg/g sein.

Ein Maß für hohe Einheitlichkeit kann sein, dass die stoffliche Zusammensetzung des nach dem vorliegenden Verfahren gewonnen Kohlenstoffmaterials über die Zeit nur geringen Schwankungen unterworfen ist. So kann Kohlenstoffmaterial, das aus einer Produktionscharge nach dem vorliegenden Verfahren stammt, in der Regel nur geringe Schwankungen in seiner stofflichen Zusammensetzung gegenüber einem Kohlenstoffmaterial aufweisen, das aus einer anderen Produktionscharge nach dem vorliegenden Verfahren stammt.

Ein Kohlenstoffmaterials, das nach dem vorliegenden Verfahren gewonnen wird kann auch gekennzeichnet sein durch
einen Natriumgehalt von weniger als 0.02 Prozent und/oder einen Eisengehalt von weniger als 0.025 Prozent und einen Aschegehalt von weniger als 2.0 Prozent,
einen Kohlenstoffgehalt von mehr als 95 Prozent, einen Natriumgehalt von weniger als 0.02 Prozent und/oder einen Eisengehalt von weniger als 0.025 Prozent,
oder
einen Kohlenstoffgehalt von mehr als 95 Prozent, einen Natriumgehalt von weniger als 0.018 Prozent und/oder einen Eisengehalt von weniger als 0.02 Prozent,
oder
einen Kohlenstoffgehalt von mehr als 95 Prozent, einen Natriumgehalt von weniger als 0.015 Prozent und/oder einen Eisengehalt von weniger als 0.018 Prozent,
oder
einen Kohlenstoffgehalt von mehr als 95 Prozent, einen Natriumgehalt von weniger als 0.02 Prozent und/oder einen Eisengehalt von weniger als 0.025 Prozent und einen Aschegehalt von weniger als 2.0 Prozent,
oder
einen Kohlenstoffgehalt von mehr als 95 Prozent, einen Natriumgehalt von weniger als 0.02 Prozent und/oder einen Eisengehalt von weniger als 0.025 Prozent und einen Aschegehalt von weniger als 1.8 Prozent,
oder
einen Kohlenstoffgehalt von mehr als 95 Prozent, einen Natriumgehalt von weniger als 0.02 Prozent und/oder einen Eisengehalt von weniger als 0.025 Prozent und einen Aschegehalt von weniger als 1.5 Prozent,
oder
einen Kohlenstoffgehalt von mehr als 95 Prozent, einen Natriumgehalt von weniger als 0.015 Prozent und/oder einen Eisengehalt von weniger als 0.018 Prozent und einen Aschegehalt von weniger als 1.5 Prozent,
oder
einen Natriumgehalt von weniger als 0.02 Prozent und/oder einen Eisengehalt von weniger als 0.025 Prozent und eine lodzahl von 700 mg/g bis 1200 mg/g,
oder
einen Natriumgehalt von weniger als 0.018 Prozent und/oder einen Eisengehalt von weniger als 0.02 Prozent und eine lodzahl von 700 mg/g bis 1200 mg/g,
oder
einen Natriumgehalt von weniger als 0.015 Prozent und/oder einen Eisengehalt von weniger als 0.018 Prozent und eine lodzahl von 700 mg/g bis 1200 mg/g,
oder
einen Natriumgehalt von weniger als 0.02 Prozent und/oder einen Eisengehalt von weniger als 0.025 Prozent und/oder einen Nickelgehalt von weniger als 0.004 Porzent,
oder
einen Natriumgehalt von weniger als 0.02 Prozent und/oder einen Eisengehalt von weniger als 0.025 Prozent und/oder einen Nickelgehalt von weniger als 0.004 Porzent und eine lodzahl von 700 mg/g bis 1200 mg/g,
oder
einen Natriumgehalt von weniger als 0.02 Prozent und/oder einen Eisengehalt von weniger als 0.025 Prozent und/oder einen Nickelgehalt von weniger als 0.004 Porzent und einen Aschegehalt von weniger als 2.0 Prozent und eine lodzahl von 700 mg/g bis 1200 mg/g,
oder
einen Natriumgehalt von weniger als 0.015 Prozent und/oder einen Eisengehalt von weniger als 0.018 Prozent und/oder einen Nickelgehalt von weniger als 0.004 Prozent und einen Aschegehalt von weniger als 1.5 Prozent und eine lodzahl von 700 mg/g bis 1200 mg/g,

### Verwendung des nach dem vorliegenden Verfahren erhaltenen Kohlenstoffmaterials

Aufgrund seiner hohen Reinheit, insbesondere seiner hohen Reinheit und Einheitlichkeit, kann das nach dem erfindungsgemäßen Verfahren hergestellte, beziehungsweise erhältliche, Kohlenstoffmaterial auch in sensiblen Anwendungsbereichen eingesetzt werden. Sensible Anwendungsbereiche umfassen beispielsweise die Lebensmittelindustrie, die pharmazeutische Industrie oder die Elektronikindustrie.

Ein weiterer Gegenstand der vorliegenden Offenbarung ist die Verwendung des nach vorliegenden Verfahren hergestellten, beziehungsweise erhältlichen, Kohlenstoffmaterials zur Herstellung eines Adsorbens, beispielsweise für die Reinigung von Flüssigkeiten, Gasen oder Feststoffen, eines Trägermaterials beispielsweise für Katalysatoren, eines Füllmaterials oder eines Elektronikbauteils, beispielsweise einer Elektrode oder eines Kondensators. Bevorzugt wird das nach dem vorliegenden Verfahren hergestellte Kohlenstoffmaterial zur Herstellung eines Adsorbens verwendet. Ein Adsorbens kann beispielsweise ein Aktivkohlefilter oder ein Aktivkohlepulver sein.

Für die genannten Verwendungszwecke kann das nach dem vorliegenden Verfahren hergestellte, beziehungsweise erhaltene Kohlenstoffmaterial beispielsweise als Pulver oder Formkörper eingesetzt werden.

Dem Fachmann ist bekannt, wie er Formkörper aus dem nach dem vorliegenden Verfahren hergestellten, beziehungsweise erhältlichen, Kohlenstoffmaterial herstellen kann. Dies kann beispielsweise durch die Zugabe von Prozesshilfsmitteln, wie Graphit, zum Kohlenstoffmaterial und entsprechende Formgebung, beispielsweise durch mechanische Bearbeitung, erfolgen.

### Adsorbens

Weiterhin wird ein Adsorbens offenbart, das das Kohlenstoffmaterial, das nach dem vorliegenden Verfahren erhältlich ist, enthält.

### Vorteile

Dadurch, dass im vorliegenden Verfahren feuchtes Kohlenstoffmaterial eingesetzt wird, kann im Allgemeinen die Staubbildung minimiert werden, wodurch sich die Arbeitssicherheit erhöht und die Arbeitsplatzbelastung verringert wird.

Auch ermöglicht es das hier offenbarte Verfahren Kohlenstoffrohmaterial, das bei der Acetylenherstellung im Wasser-Quench-Verfahren als Nebenprodukt anfällt, zu veredeln und einer höheren Wertschöpfung zuzuführen.

Zudem ist das vorliegenden Verfahren nicht auf die Verwendung von Grünkoks aus Biomaterials als Kohlenstoffrohmaterial limitiert, dessen Herstellung ökologisch bedenklich sein kann. Kohlenstoffmaterialien mit hoher Reinheit und insbesondere hoher Reinheit und Einheitlichkeit können ökologisch und ökonomisch hergestellt werden.

### Beispiele

### Bestimmungsmethoden:

Die Bestimmung der spezifischen Oberfläche erfolgte gemäß DIN ISO 9277:1995.

### Bestimmung von Kohlenstoff, Wasserstoff, Stickstoff mittels Elementaranalyse:

Methode: Die Probe wurde in einer Heliumatmosphäre unter dem Zusatz von Sauerstoff verbrannt, NOₓ wurde nach Umwandlung zu N₂, Kohlenstoff wurde als CO₂ und Wasserstoff wurde als H₂O über einen Wärmeleitfähigkeitsdetektor bestimmt.

### Reagenzien:

Reaktionsgas: Sauerstoff
Trägergas: Helium
Verbrennungskatalysator: CuO
Reduktionskatalysator: Cu

### Probenvorbereitung:

1 bis 5 mg der Probe wurden unter Standardatmosphäre eingewogen. Die Probe wurde anschließend im CHN-Analysegerät (Kohlenstoff, Wasserstoff, Stickstoff) platziert.

### Messparameter:

Verbrennungstemperatur: ca. 1100°C
Reduktionstemperatur: ca. 700°C

### Bestimmung von Schwefel mittels Elementaranalyse:

Methode: Die Probe wurde in einem Helium-Sauerstoffstrom verbrannt (Umwandlung von S zu SO₂). SO₂ wurde über einen Wärmeleitfähigkeitsdetektor detektiert.

### Reagenzien:

Reaktionsgas: Sauerstoff
Trägergas: Helium
Verbrennungskatalysator: Cu, WO₃ on Al₂O₃
Additive 2:1 m/m V₂O₅ / WO₃

### Probenvorbereitung:

1 bis 5 mg der Probe wurden unter Standardatmosphäre eingewogen. Die Probe wurde anschließend im Analysegerät für Schwefel platziert.

### Messparameter:

Verbrennungstemperatur: ca. 1030°C
Trägergasdruck: ca 100 kPa

### Bestimmung von Fe, Ni, Na:

Die Probe wird mit konzentrierter Schwefelsäure versetzt und auf 300°C erhitzt. Nach Abrauchen der Schwefelsäure wird der Rückstand mit einer Mischung enthaltend konzentrierte Salpetersäure, konzentrierte Perchlorsäure und konzentrierte Schwefelsäure versetzt und bei leichtem Erwärmen mineralisiert. Der Vorgang ist in der Regel abgeschlossen wenn sämtliche organische Bestandteile oxidiert sind. Durch weiteres Erwärmen werden die Säuren entfernt und der dabei erhaltene Rückstand wird in verdünnter Salzsäure aufgenommen. Die dadurch erhaltene Lösung wird anschließend mittels atomspektrometrischer Messverfahren, ICP-OES, vermessen.

Die Bestimmung des Aschegehalts erfolgte gemäß ASTM D2866 - 11
Die Bestimmung der lodzahl erfolgte gemäß ASTM D4607 (1999).

### Kenngrößen des eingesetzten Kohlenstoffrohmaterials:

Herkunft: Acetylen-Wasser-Quench-Verfahren
Kohlenstoffgehalt: 96 Prozent, bezogen auf die Gesamttrockenmasse des Kohlenstoffrohmaterials
Wassergehalt: 70 Gewichtsprozent, bezogen auf die Gesamtmasse
Schwefelgehalt: 0.02 Prozent, bezogen auf die Gesamttrockenmasse des Kohlenstoffrohmaterials
Stickstoffgehalt: < 0.7 Prozent, bezogen auf die Gesamttrockenmasse des Kohlenstoffrohmaterials
Natriumgehalt: 0.23 Prozent, bezogen auf die Gesamttrockenmasse des Kohlenstoffrohmaterials
Eisengehalt: 0.19 Prozent, bezogen auf die Gesamttrockenmasse des Kohlenstoffrohmaterials
Nickelgehalt: < 0.004 Prozent, bezogen auf die Gesamttrockenmasse des Kohlenstoffrohmaterials
Spezifische Oberfläche: von 200 bis 300 m²/g

### Vergleichsbeispiel 1: Behandlung des Kohlenstoffrohmaterials mit Wasser

Das Kohlenstoffrohmaterial wurde manuell zerkleinert. Eine 200 g Probe wurde vorgelegt und mit demineralisiertem Wasser mit einer Temperatur von 100°C auf 550 ml aufgefüllt. Die Dispersion wurde über ein Sieb abgetrennt. Die Probe wurde daraufhin abermals zerkleinert und mit 200 ml demineralisiertem Wasser nachgespült. Die erhaltene Dispersion wurde für eine Stunde bei 300 RPM unter Rückfluss gerührt. Die Dispersion wurde anschließend filtriert und mit 500 ml heißem demineralisiertem Wasser nachgespült. Eine Probe von 1.9 g wurde zur Analyse bis zur Gewichtskonstanz getrocknet. Die Trocknung erfolgte bei 80°C.

Natriumgehalt: 0.12 Prozent bezogen auf die Gesamttrockenmasse
Eisengehalt: 0.19 Prozent bezogen auf die Gesamttrockenmasse

### Vergleichsbeispiel 2: Behandlung des Kohlenstoffrohmaterials mit Salzsäure

Das Kohlenstoffrohmaterial wurde manuell zerkleinert. Eine 200 g Probe wurde vorgelegt und mit demineralisiertem Wasser auf einen Liter aufgefüllt. Die Dispersion wurde mit 10 ml Salzsäure (37 Prozent) versetzt und unter Rühren (300 RPM) für eine Stunde unter Rückflussbedingungen erhitzt. Die Dispersion wurde anschließend filtriert und der Rückstand mit 500 ml heißem demineralisiertem Wasser nachgespült. Der Filterkuchen wurde anschließend in einem Liter demineralisiertem Wasser dispergiert und unter Rühren (300 RPM) für eine Stunde unter Rückflussbedingungen erhitzt. Die Dispersion wurde filtriert und mit demineralisiertem Wasser (50 bis 70°C) nachgespült bis sich im Waschwasser ein pH von 7 eingestellt hat. Eine Probe von 1.9 g wurde zur Analyse bis zur Gewichtskonstanz getrocknet. Die Trocknung erfolgte bei 80°C.

Natriumgehalt: 0.10 Prozent bezogen auf die Gesamttrockenmasse
Eisengehalt: 0.18 Prozent bezogen auf die Gesamttrockenmasse

### Beispiel 1: Behandlung des Kohlenstoffrohmaterials mit Wasserdampf

30 kg Kohlenstoffrohmaterial wurden unter Stickstoff in einem Rohrofen auf 900°C erhitzt. Die Heizrate betrug dabei 10 K/min. 10 Minuten nach Erreichen der Zieltemperatur wurde der Gasstrom umgestellt und betrug über einen Zeitraum von einer Stunde 50 % Wasserdampf und 50 % Stickstoff. Danach wurde das so erhaltene Kohlenstoffmaterial unter einer Stickstoffatmosphäre abgekühlt.

Die spezifische Oberfläche des so erhaltenen Kohlenstoffmaterials betrug 987 m²/g.

### Beispiel 2: Behandlung des Kohlenstoffrohmaterials mit Kohlenstoffdioxid

602 mg Kohlenstoffrohmaterial wurden unter Argon in einer Thermogravimetrie-Apparatur auf 900°C erhitzt. Die Heizrate betrug dabei 10 K/min. 20 Minuten nach Erreichen der Zieltemperatur wurde der Gasstrom umgestellt und betrug über einen Zeitraum von zwei Stunden 90 % Kohlenstoffdioxid und 10 % Argon. Danach wurde das so erhaltene Kohlenstoffmaterial unter einer Argonatmosphäre abgekühlt.

Die spezifische Oberfläche des so behandelten Kohlenstoffmaterials betrug 987 m²/g

### Vergleichsbeispiel 3: Behandlung des so erhaltenen Kohlenstoffmaterials mit Wasser

Das mit Wasserdampf oder Kohlenstoffdioxid behandelte Kohlenstoffmaterial wurde manuell zerkleinert. Eine 200 g Probe wurde vorgelegt und mit demineralisiertem Wasser mit einer Temperatur von 100°C auf 550 ml aufgefüllt. Die Dispersion wurde über ein Sieb abgetrennt. Die Probe wurde daraufhin abermals zerkleinert und mit 200 ml demineralisiertem Wasser nachgespült. Die erhaltene Dispersion wurde für eine Stunde bei 300 RPM unter Rückfluss gerührt. Die Dispersion wurde anschließend filtriert und mit 500 ml heißem demineralisiertem Wasser nachgespült. Eine Probe von 1.9 g wurde zur Analyse bis zur Gewichtskonstanz getrocknet. Die Trocknung erfolgte bei 80°C.

Natriumgehalt: 0.031 Prozent bezogen auf die Gesamttrockenmasse
Eisengehalt: 0.3 Prozent bezogen auf die Gesamttrockenmasse

### Beispiel 3: Behandlung des so erhaltenen Kohlenstoffmaterials mit Salzsäure

Das mit Wasserdampf oder Kohlenstoffdioxid behandelte Kohlenstoffmaterial wurde manuell zerkleinert. Eine 200 g Probe wurde vorgelegt und mit demineralisiertem Wasser auf einen Liter aufgefüllt. Die Dispersion wurde mit 10 ml Salzsäure (37 Prozent) versetzt und unter Rühren (300 RPM) für eine Stunde unter Rückflussbedingungen erhitzt. Die Dispersion wurde anschließend filtriert und der Rückstand mit 500 ml heißem demineralisiertem Wasser nachgespült. Der Filterkuchen wurde anschließend in einem Liter demineralisiertem Wasser dispergiert und unter Rühren (300 RPM) für eine Stunde unter Rückflussbedingungen erhitzt. Die Dispersion wurde filtriert und mit demineralisiertem Wasser (50 bis 70°C) nachgespült bis sich im Waschwasser ein pH von 7 eingestellt hat. Eine Probe von 1.9 g wurde zur Analyse bis zur Gewichtskonstanz getrocknet. Die Trocknung erfolgte bei 80°C.

Natriumgehalt: 0.013 Prozent bezogen auf die Gesamttrockenmasse
Eisengehalt: 0.009 Prozent bezogen auf die Gesamttrockenmasse
Nickelgehalt: <0.004 Prozent bezogen auf die Gesamttrockenmasse
Aschegehalt: 1.32 Prozent bezogen auf die Gesamttrockenmasse
BET: 900 bis 1000 m²/g
lodzahl: 854 mg/g

Wie aus den Beispielen ersichtlich kann aus dem Kohlenstoffrohmaterial in dem vorliegenden Verfahren ein Kohlenstoffmaterial mit einem Natriumgehalt von 0.013 und einem Eisengehalt von 0.009 Prozent bezogen auf die Gesamttrockenmasse erhalten werden.

## Patentansprüche

1. Verfahren zur Weiterverwertung eines Kohlenstoffrohmaterials, wobei das Kohlenstoffrohmaterial einen Wassergehalt von 20 bis 90 Gewichtsprozent, bezogen auf die Gesamtmasse und einen Schwefelgehalt von weniger als 0.05 Prozent bezogen auf die Gesamttrockenmasse aufweist und das umfasst,
dass das Kohlenstoffrohmaterial mit Kohlenstoffdioxid oder Wasserdampf oder deren Mischung bei einer Temperatur von bis zu 1100°C behandelt wird
und
dass das so erhaltene Kohlenstoffmaterial mit einer Säure versetzt wird, wobei das Kohlenstoffrohmaterial aus dem Acetylen-Wasser-Quensch-Verfahren stammt.

2. Verfahren nach Anspruch 1, wobei das Kohlenstoffrohmaterial einen Nickelgehalt von weniger als 0.006 Prozent bezogen auf die Gesamttrockenmasse aufweist.

3. Verfahren nach einem der vorherigen Ansprüche, wobei das Kohlenstoffrohmaterial einen Wassergehalt von 55 bis 85 Gewichtsprozent bezogen auf die Gesamtmasse aufweist.

4. Verfahren nach einem der vorherigen Ansprüche, wobei der Wassergehalt des Kohlenstoffrohmaterials durch Trocknen und/oder durch Beimischen eines anderen Kohlenstoffmaterials eingestellt wird.

5. Verfahren nach einem der vorherigen Ansprüche, wobei das so erhaltene Kohlenstoffmaterial mit Salzsäure, Schwefelsäure, Phosphorsäure. Zitronensäure, Oxalsäure, Essigsäure oder einer Mischung davon versetzt wird.

6. Verfahren nach Anspruch 5, wobei das so erhaltene Kohlenstoffmaterial mit Salzsäure und/oder Schwefelsäure versetzt wird.

7. Verfahren nach Anspruch 5, wobei das so erhaltene Kohlenstoffmaterial mit Salzsäure versetzt wird.

## Claims

1. A process for further use of a carbon raw material, wherein the carbon raw material has a water content of 20 to 90 weight percent based on the total mass and a sulfur content of less than 0.05 percent based on the total dry mass and which comprises
that the carbon raw material is treated with carbon dioxide or water vapor or a mixture thereof at a temperature of up to 1100°C
and
that the thus obtained carbon material is admixed with an acid, wherein the carbon raw material originates from the acetylene water quench process.

2. The process according to claim 1, wherein the carbon raw material has a nickel content of less than 0.006 percent based on the total dry mass.

3. The process according to any of the preceding claims, wherein the carbon raw material has a water content of 55 to 85 weight percent based on the total mass.

4. The process according to any of the preceding claims, wherein the water content of the carbon raw material is adjusted by drying and/or by addition of another carbon material.

5. The process according to any of the preceding claims, wherein the thus obtained carbon material is admixed with hydrochloric acid, sulfuric acid, phosphoric acid, citric acid, oxalic acid, acetic acid or a mixture thereof.

6. The process according to claim 5, wherein the thus obtained carbon material is admixed with hydrochloric acid and/or sulfuric acid.

7. The process according to claim 5, wherein the thus obtained carbon material is admixed with hydrochloric acid.

## Revendications

1. Procédé pour la réutilisation d'une matière première carbonée, la matière première carbonée présentant une teneur en eau de 20 à 90 pour cent en poids, par rapport à la masse totale et une teneur en soufre inférieure à 0,05 pour cent par rapport à la matière sèche totale et qui comprend le fait que la matière première carbonée est traitée avec du dioxyde de carbone ou de la vapeur d'eau ou avec un mélange de ceux-ci à une température de jusqu'à 1100°C
et
que le matériau carboné ainsi obtenu est mélangé avec un acide, la matière première carbonée provenant d'un procédé de trempe acétylène-eau.

2. Procédé selon la revendication 1, la matière première carbonée présentant une teneur en nickel inférieure à 0,006 pour cent par rapport à la matière sèche totale.

3. Procédé selon l'une quelconque des revendications précédentes, la matière première carbonée présentant une teneur en eau de 55 à 85 pour cent en poids par rapport à la masse totale.

4. Procédé selon l'une quelconque des revendications précédentes, la teneur en eau de la matière première carbonée étant ajustée par le séchage et/ou par l'incorporation d'un autre matériau carboné.

5. Procédé selon l'une quelconque des revendications précédentes, le matériau carboné ainsi obtenu étant mélangé avec de l'acide chlorhydrique, de l'acide sulfurique, de l'acide phosphorique, de l'acide citrique, de l'acide oxalique, de l'acide acétique ou avec un mélange de ceux-ci.

6. Procédé selon la revendication 5, le matériau carboné ainsi obtenu étant mélangé avec de l'acide chlorhydrique et/ou de l'acide sulfurique.

7. Procédé selon la revendication 5, le matériau carboné ainsi obtenu étant mélangé avec de l'acide chlorhydrique.
